(19) Europäisches Patentamt
European Patent Office
Office européen des brevets

(11) Veröffentlichungsnummer: **0 046 968**
**B1**

(12) # EUROPÄISCHE PATENTSCHRIFT

(45) Veröffentlichungstag der Patentschrift: **28.03.84**

(51) Int. Cl.³: **C 08 G 69/44,** C 09 J 3/16

(21) Anmeldenummer: **81106578.8**

(22) Anmeldetag: **25.08.81**

(54) **Polyesteramide und deren Verwendung zum Verkleben von organischen und anorganischen Substraten.**

(30) Priorität: **03.09.80 DE 3033132**

(43) Veröffentlichungstag der Anmeldung: **10.03.82 Patentblatt 82/10**

(45) Bekanntmachung des Hinweises auf die Patenterteilung: **28.03.84 Patentblatt 84/13**

(84) Benannte Vertragsstaaten: **AT BE DE FR GB IT LU NL SE**

(56) Entgegenhaltungen:
**DE - A - 1 520 002**
**GB - A - 1 076 030**
**US - A - 3 341 573**

(73) Patentinhaber: **SCHERING AKTIENGESELLSCHAFT Berlin und Bergkamen, Waldstrasse 14 Postfach 15 40, D-4709 Bergkamen (DE)**

(72) Erfinder: **Bolze, Manfred, Rotherbachstrasse 39 b, D-4619 Bergkamen-Oberaden (DE)**
Erfinder: **Drawert, Manfred, Dr., Dipl.-Chem., Alte Kreisstrasse 13, D-5758 Fröndenberg (DE)**

**EP 0 046 968 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Polyesteramide und deren Verwendung zum Verkleben von organischen und anorganischen Substraten

Gegenstand der Erfindung sind Polyesteramide, hergestellt durch Kondensation von dimerisierten Fettsäuren, aliphatischen Diaminen, Diglykolamin [Diglykolamin ist ein eingetragenes Warenzeichen der Firma Jefferson Chemical Co., Inc.[vgl. „The Condensed Chemical Dictionary", 8. Ausgabe, Van Nostrand Reinhold Company 1971, S. 300, 961 und 967] für 2-(2-Aminoethoxy)éthanol] und gegebenenfalls Codicarbonsäuren, und deren Verwendung zum Verkleben von organischen und anorganischen Substraten.

Aus der DE-AS Nr. 1520002 sind Polyesteramide aus dimerisierten Fettsäuren einer genau definierten Zusammensetzung, einer Dicarbonsäure, einem Diamin und Alkanolaminen der allgemeinen Formel $H_2N-R'''-OH$, in welcher R''' ein aliphatischer Kohlenwasserstoffrest ist, bekannt. Diese Produkte sollen in Kombination mit guter Schlagfestigkeit eine höhere Abschälfestigkeit an Metallen aufweisen.

Diese Produkte zeigen zwar bei Raumtemperatur eine recht gute Flexibilität, die jedoch für bestimmte Anwendungen, insbesondere bei niedrigen Temperaturen um oder unter 0°C, noch zu wünschen übriglässt. Weiterhin entspricht die Haftung an organischen Substraten wie z.B. Polyäthylen oder den bekannten, schwierig zu verklebenden Metallen, wie Blei oder Aluminium, noch nicht den Anforderungen der Praxis.

Aufgabe der vorliegenden Erfindung ist es, diese Nachteile des Standes der Technik zu überwinden und Polyesteramide zu schaffen, welche in Kombination mit guter Dehnung, schnellen Abbindezeiten und guter Tieftemperaturflexibilität eine hohe Haftung an organischen und anorganischen Substraten aufweisen.

Diese Aufgabe wird erfindungsgemäss gelöst durch Polyesteramide, welche hergestellt werden durch Kondensation von

A) dimerisierten Fettsäuren mit 16 bis 44 Kohlenstoffatomen,

B) einem Diamin der allgemeinen Formel I

$$H_2N-R-NH_2 \qquad (I)$$

in welcher R ein aliphatischer Kohlenwasserstoffrest mit 2 bis 36 Kohlenstoffatomen sein kann, und

C) Diglykolamin® und gegebenenfalls

D) mindestens einer der Dicarbonsäuren der allgemeinen Formel II

$$R''OOC-R'-COOR'' \qquad (II)$$

in welcher R' ein aliphatischer, cycloaliphatischer, aromatischer, araliphatischer Kohlenwasserstoffrest mit 4 bis 12 Kohlenstoffatomen und R'' Wasserstoff oder ein Alkylrest mit 1 bis 8 Kohlenstoffatomen sein kann.

Ein weiterer Gegenstand der Erfindung ist die Verwendung der erfindungsgemässen Polyesteramide zur Verklebung von organischen und anorganischen Substraten miteinander oder untereinander.

Die erfindungsgemäss mitverwendeten dimerisierten Fettsäuren haben Dimergehalte zwischen 55 und 100%, vorzugsweise zwischen 70 und 96%.

Der Ausdruck dimerisierte Fettsäure bezieht sich in allgemeiner Form auf polymerisierte Säuren, die aus Fettsäuren erhalten werden. Der Ausdruck Fettsäure umfasst ungesättigte natürliche und synthetische einbasische aliphatische Säuren mit 8 bis 22 Kohlenstoffatomen, bevorzugt 18 Kohlenstoffatomen. Diese Fettsäuren lassen sich nach bekannten Verfahren polymerisieren (vgl. DE-OS Nrn. 1443938, 1443968, DE-PS Nrn. 2118702 und 1280852).

Typische, im Handel erhältliche polymere Fettsäuren haben etwa folgende Zusammensetzung:

| | | |
|---|---|---|
| Monomere Säuren | (Mo) | 5 bis 15 Gew.-% |
| Dimere Säuren | (Di) | 55 bis 80 Gew.-% |
| Trimere Säuren | (Tri) | 10 bis 35 Gew.-% |

Der Gehalt an dimerer Säure kann durch allgemein bekannte Destillationsverfahren bis zu 100 Gew.-% erhöht werden.

Die eingesetzte dimere Fettsäure kann auch hydrierter Form vorliegen.

Bei Verwendung von destillierter dimerer Fettsäure werden Schmelzkleber mit verbesserter Farbzahl erhalten. Andererseits ist die Verwendung von handelsüblicher technischer polymerisierter Fettsäure zur Herstellung von Schmelzklebern für besondere Zwecke möglich. Bei der Verwendung von technischer dimerer Fettsäure sei nur darauf hingewiesen, dass der Gehalt an trimerer Fettsäure eine maximale Grenze nicht überschreiten sollte. Dieser Grenzwert hängt von dem jeweiligen Gehalt an dimerer und monomerer Fettsäure der polymerisierten Fettsäure ab und kann durch einen orientierenden Versuch, wie er zur handwerklichen Alltagsroutine des Durchschnittsfachmanns gehört, festgestellt werden.

Bevorzugt wird jedoch destillierte dimere Fettsäure mit einem Gehalt an dimerer Fettsäure von 70 bis 96% verwendet.

Der gegebenenfalls bereits vorhandene Anteil an Monocarbonsäuren in der dimerisierten Fettsäure kann zur Einstellung eines gewünschten Molekulargewichtes durch Zusatz weiterer Monocarbonsäuren noch erhöht werden. Als erfindungsgemäss mitverwendbare Monocarbonsäuren kommen insbesondere gradkettige oder verzweigte, gesättigte oder ungesättigte Monocarbonsäuren mit 2 bis 22 Kohlenstoffatomen in Betracht, wie z.B. Essig-, Propion-, Butter-, Valerian-, Laurin-, Palmitin-, Palmitolein-, Erucasäure. Erfindungsgemäss bevorzugt werden die $C_{18}$-Monocarbonsäuren wie Stearin-, Öl-, Linol-, Linolensäure und die natürlichen Fettsäuregemische wie z.B. Tallölfettsäure oder Sojaölfettsäure.

Als erfindungsgemäss mitzuverwendendes Diamin kommen Diamine der allgemeinen Formel I

$$H_2N-R-NH_2 \qquad (I)$$

in welcher R ein aliphatischer Kohlenwasserstoffrest mit 2 bis 36, insbesondere 2 bis 6 Kohlenstoffatomen ist, in Betracht, wie z.B. 1,2-Diaminoäthan, 1,6-Diaminohexan, 1,9-Diaminononan,

1,12-Diaminododecan, 1,13-Diaminotridecan, Dimerfettsäurediamin (hergestellt durch bekannte Verfahren aus dimeren Fettsäuren).

Als Alkanolamin wird erfindungsgemäss neben der Diaminkomponente Diglykolamin® eingesetzt. Das Verhältnis Amin zu Diglykolamin® wird im wesentlichen durch den gewünschten Flexibilitätsgrad bei tiefen Temperaturen, aber auch durch die erforderliche Abbindegeschwindigkeit und die Haftung an den jeweiligen Substraten bestimmt. Weiterhin beeinflussen Art und Menge der mitverwendeten Säuren das Verhältnis.

Erfindungsgemäss wird ein Äquivalentverhältnis von Diamin zu Diglykolamin® von 0,9:0,1 bis 0,3:0,7, insbesondere von 0,8:0,2 bis 0,6:0,4 bevorzugt.

Diese Verhältnisse sind nicht kritisch; sie können, wenn die Erfordernisse der Praxis es erfordern, zur Modifizierung der Produkte nach oben oder unten in gewissem Masse auch überschritten werden.

Von gewissen Polyamiden auf Basis von dimeren Fettsäuren, Alkolamin und Codicarbonsäuren ist es bekannt, dass diese Produkte in erhöhtem Masse Luftfeuchtigkeit aufnehmen und beim Wiederaufschmelzen einen Viskositätsabbau (Hydrolyse) erleiden können. Mit den erfindungsgemässen Produkten auf Basis von Diglykolamin® konnte dieser Nachteil überraschenderweise überwunden werden.

Es war überraschend, dass durch die Mitverwendung von Diglykolamin® anstelle der Verwendung der bekannten, rein aliphatischen Alkanolamine, eine derart gute Kombination von wünschenswerten Eigenschaften erzielt werden konnte. Das schliesst insbesondere die gute Haftung an dem als bekanntermassen schwierig zu verklebenden Polyäthylen sowie die Haftung an nicht vorgewärmten Metallen wie insbesondere Blei und Aluminium ein. Hierbei ist es vorteilhaft, einen Diglykolamin®-Anteil von 0,4 bis 0,6 Eq zu verwenden. Überraschend war auch, dass trotz der verbesserten Tieftemperaturflexibilität bei −20°C die kurzen Abbindezeiten der Produkte bei Raumtemperatur erhalten werden konnten. Dies trifft überraschenderweise auch für die Produkte mit relativ niedrigen Erweichungspunkten zu.

Neben Polyäthylen, Blei und Aluminium können die folgenden Substrate miteinander oder untereinander verklebt werden: Leder, Gummi, Textilien, Holz, Papier, PVC, Polyolefine, Polyester, Keramik, die in der Technik gebräuchlichen Eisen- und Nichteisenmetalle wie Stahl, Kupfer, Zink, Zinn oder deren Legierungen.

Bei den besonders schwierig zu verklebenden Polyestern wird der Diglykolamin®-Anteil der erfindungsgemässen Polyesteramide vorteilhafterweise über 0,5 Eq angehoben.

Die erfindungsgemäss gegebenenfalls mitverwendbaren Dicarbonsäuren fallen unter die allgemeine Formel II

$$R''OOC-R'-COOR'' \quad (II)$$

in welcher R' ein gegebenenfalls substituierter aliphatischer, cycloaliphatischer, aromatischer oder araliphatischer Kohlenwasserstoffrest mit 4 bis 12 Kohlenstoffatomen und R'' Wasserstoff oder ein Alkylrest mit 1 bis 8 Kohlenstoffatomen sein kann.

Diese Codicarbonsäuren werden in Mengen von 0 bis 0,9 Eq, bezogen auf die dimerisierte Fettsäure, eingesetzt.

Als Beispiele seien genannt: Adipin-, Pimelin-, Kork-, Azelain-, Sebazin-, Decandicarbon-, Brassyl-, 1,4-Cyclohexandicarbon-, Terephthal-, Isophthal-, Naphthalindicarbon-, 1,4-Phenylendiessigsäure. Azelain-, Sebazin- und Terephthalsäure werden erfindungsgemäss bevorzugt.

Die Summe der molaren Äquivalente der zur Anwendung kommenden Amin- und Hydroxylgruppen der Komponenten B und C ist vorzugsweise praktisch gleich den molaren Äquivalenten der Carboxylgruppen der Komponenten A und D.

Die Kondensation der beschriebenen Komponenten zu den erfindungsgemässen Polyesteramiden erfolgt bei Temperaturen zwischen 200 und 300°C in der üblichen Weise.

Die Prüfung der Abbindezeit erfolgte nach der folgenden Methode, deren Ergebnisse in der Tabelle aufgeführt sind.

Ein eingespanntes, 3 mm starkes Gummistück (Noratest®-Gummi) mit einer Fläche von 6 $cm^2$ wird mit einem zweiten Gummistück verklebt. Die Klebfuge beträgt dabei 70 bis 80 µm. An dem aufgeklebten Gummistück greift mittels Federzug eine Abzugskraft von 0,067 $N/mm^2$ an. Die Abbindezeit ist nun die Zeit, bei der die Abzugskraft nicht mehr in der Lage ist, das obere Gummistück vom unteren abzuziehen. Die Prüfung an Metallen erfolgt nach der gleichen Versuchsanordnung. Die Abbindezeiten an Metallen sind aufgrund deren besserer Wärmeleitfähigkeit wesentlich kürzer als die an Gummi ermittelten Werte.

Diese Methode hat den Vorteil, dass die Abbindezeit an einer praxisgerechten Klebfuge bestimmt wird.

Die Messung der Dehnung wurde entsprechend ASTM D 1708 durchgeführt.

Die Beurteilung der Haftung (Tabelle IV) erfolgte subjektiv nach der folgenden Methode:

Das aus der Schmelze auf das Substrat aufgebrachte Harz lässt man auf Raumtemperatur abkühlen (ca. 1 h) und versucht dann, mit einem Messer das Harz von dem Substrat abzuschälen. Die Beurteilungen bedeuten:

sehr gut bis gut — keine Abschälung möglich

befriedigend — teilweise Absplitterung des Harzes möglich

Die in den nachfolgenden Beispielen verwendeten dimeren Fettsäuren haben die folgende Zusammensetzung (nach GLC).

| Beispiele | *Polymerisierte Ölsäure* | (%) |
|---|---|---|
| 1 bis 3, 5, 10 | monomere Fettsäure | 3,9 |
| | dimere Fettsäure | 93,1 |
| | trimere und höherpolymere Fettsäure | 3,0 |

| Beispiele | *Polymerisierte Tallölfettsäure* | (%) |
|---|---|---|
| 6 bis 9 | monomere Fettsäure | 3,0 |
| | dimere Fettsäure | 93,0 |

trimere und höherpolymere Fettsäure 4,0

Beispiel 4 *Polymerisierte Tallölfettsäure* (%)
monomere Fettsäure 4,0
dimere Fettsäure 77,8
trimere und höherpolymere Fettsäure 18,2

*Beispiel 1:*

In einem mit Rührer, Thermometer und absteigendem Kühler versehenen 1-l-Dreihalskolben wurden unter Stickstoff 400 g dimerisierte Ölsäure (1 Eq), 38,02 g Äthylendiamin (0,9 Eq) und 7,38 g Diglykolamin® (0,1 Eq) miteinander vermischt und in 2 h auf 230°C aufgeheizt. Diese Temperatur wurde 6 h lang gehalten.

Während der letzten 4 h wurde ein Vakuum von 20 mmHg-Säule ($2{,}66 \cdot 10^3$ Pa) angelegt.

Das erhaltenene Polyesteramid zeigte einen Ring- und Ballerweichungspunkt von 108°C und eine Schmelzviskosität, gemessen bei 200°C, von 13,6 Pa·s.

Der Dehnungswert des Produktes bei 0°C betrug 4,8 m/m.

Die in den nachfolgenden Tabellen aufgeführten Produkte wurden in analoger Weise hergestellt.

*Tabelle 1*

| Beispiel | Zusammensetzung | | | |
|---|---|---|---|---|
| | Polymere Fettsäure | Codicarbonsäure | Diamin | Diglykolamin® |
| 2 | 1,0 Eq polymerisierte Ölsäure | — | 0,7 Eq Äthylendiamin | 0,3 Eq |
| 3 | 0,9 Eq polymerisierte Ölsäure | 0,1 Eq Acelainsäure | 0,6 Eq Äthylendiamin | 0,4 Eq |
| 4 | 0,9 Eq polymerisierte Tallölfettsäure | 0,1 Eq Acelainsäure | 0,6 Eq Äthylendiamin | 0,4 Eq |
| 5 | 0,7 Eq polymerisierte Ölsäure | 0,3 Eq Acelainsäure | 0,6 Eq Äthylendiamin | 0,4 Eq |
| 6 | 0,8 Eq polymerisierte Tallölfettsäure | 0,2 Eq Dimethylterephthalat | 0,5 Eq Äthylendiamin | 0,5 Eq |
| 7 | 0,7 Eq polymerisierte Tallölfettsäure | 0,3 Eq Phenylendiessigsäure | 0,6 Eq Äthylendiamin | 0,4 Eq |
| 8 | 0,6 Eq polymerisierte Tallölfettsäure | 0,2 Eq Acelainsäure<br>0,2 Eq Sebacinsäure | 0,5 Eq Äthylendiamin | 0,5 Eq |
| 9 | 0,1 Eq polymerisierte Tallölfettsäure | 0,9 Eq Acelainsäure | 0,8 Eq Dimerdiamin | 0,2 Eq |
| 10 | 0,7 Eq polymerisierte Ölsäure | 0,3 Eq Acelainsäure | 0,6 Eq Hexamethylendiamin | 0,4 Eq |

*Tabelle 1* (Fortsetzung)

| Beispiel | Ring- und Ballerweichungspunkt (°C) | Schmelzviskosität bei 200° C (Pa · s) | Abbindezeit an Noratest®-Gummi bei Raumtemperatur (Auftragstemperatur 200°C) | Dehnung (m/m) |
|---|---|---|---|---|
| 2 | 93 | 4,0 | 2 s | 6,3 |
| 3 | 113 | 3,7 | 1,5 s | 7,4 |
| 4 | 107 | 2,0 | 6 s | 6,3 |
| 5 | 147 | 3,8 | 3 s | 5,7 |
| 6 | 182 | 0,7 | 3 min | 12,0 |

*Tabelle 1* (Fortsetzung)

| Beispiel | Ring- und Ballerweichungspunkt (°C) | Schmelzviskosität bei 200° C (Pa · s) | Abbindezeit an Noratest®-Gummi bei Raumtemperatur (Auftragstemperatur 200°C) | Dehnung (m/m) |
|---|---|---|---|---|
| 7 | 195 | 4,6 | 2 s | 3,7 |
| 8 | 119 | 1,2 | 30 s | 3,8 |
| 9 | 91 | 2,4 | 15 s | 5,1 |
| 10 | 115 | 2,1 | 11 min | 3,0 |

*Tabelle 2*

Vergleichsbeispiele: Zusammensetzung

| | Polymere Fettsäure | Acelainsäure | Äthylendiamin | Diglykolamin® | Äthanolamin |
|---|---|---|---|---|---|
| Erfindungsgemässes Produkt Beispiel 2 | 1,0 Eq polymerisierte Ölsäure | — | 0,7 Eq | 0,3 Eq | — |
| Vergleichsprodukt A | 1,0 Eq polymerisierte Ölsäure | — | 0,7 Eq | — | 0,3 Eq |
| Erfindungsgemässes Produkt Beispiel 5 | 0,7 Eq polymerisierte Ölsäure | 0,3 Eq | 0,6 Eq | 0,4 Eq | — |
| Vergleichsprodukt B | 0,7 Eq polymerisierte Ölsäure | 0,3 Eq | 0,6 Eq | — | 0,4 Eq |

*Tabelle 3*

Vergleichsbeispiele: Messwerte

| | Ring- und Ballerweichungspunkt (°C) | Schmelzviskosität bei 200°C (Pa · s) | Abbindezeit an Noratest®-Gummi bei Raumtemperatur (Auftragstemperatur: 200°C) (s) | Dehnung bei | | |
|---|---|---|---|---|---|---|
| | | | | Raumtemperatur (m/m) | 0°C (m/m) | −20°C (m/m) |
| Erfindungsgemässes Produkt Beispiel 2 | 93 | 4,0 | 2 | 8,3 | 6,3 | 3,2 |
| Vergleichsprodukt A | 106 | 4,7 | 1 | 6,4 | 5,2 | 0,7 |
| Erfindungsgemässes Produkt Beispiel 5 | 147 | 3,8 | 4 | 4,8 | 5,7 | 4,5 |
| Vergleichsprodukt B | 150 | 3,7 | 7 | 2,1 | 5,4 | 2,6 |

*Tabelle 4*

Vergleichsbeispiele: Haftungen

| | Polymere Fettsäure | Acelainsäure | Äthylendiamin | Diglykolamin | Äthanolamin | Ring- und Ballerweichungspunkt (°C) | Schmelzviskosität bei 200°C (Pa · s) | Haftung an Polyäthylen | Haftung an Blei |
|---|---|---|---|---|---|---|---|---|---|
| Erfindungsgemässes Produkt Beispiel 2 | 1 Eq polymerisierte Ölsäure | — | 0,7 Eq | 0,3 Eq | — | 93 | 4,0 | sehr gut | sehr gut |
| Vergleichsprodukt A | 1 Eq polymerisierte Ölsäure | — | 0,7 Eq | — | 0,3 Eq | 106 | 4,7 | befriedigend | befriedigend |
| Erfindungsgemässes Produkt Beispiel 5 | 0,7 Eq polymerisierte Ölsäure | 0,3 Eq | 0,6 Eq | 0,4 Eq | — | 147 | 3,8 | sehr gut | sehr gut |
| Vergleichsprodukt B | 0,7 Eq polymerisierte Ölsäure | 0,3 Eq | 0,6 Eq | — | 0,4 Eq | 150 | 3,7 | befriedigend | gut |

**Patentansprüche** für die Vertragsstaaten BE, DE, FR, GB, IT, LU, NL, SE

1. Polyesteramide, hergestellt durch Kondensation von

A) dimerisierten Fettsäuren mit 16 bis 44 Kohlenstoffatomen,

B) einem Diamin der allgemeinen Formel (I)

$$H_2N-R-NH_2 \quad (I)$$

in welcher R ein aliphatischer Kohlenwasserstoffrest mit 2 bis 36 Kohlenstoffatomen sein kann, und

C) Diglykolamin® [= 2-(2-Aminoethoxy)ethanol] und gegebenenfalls

D) mindestens einer der Dicarbonsäuren der allgemeinen Formel (II)

$$R''OOC-R'-COOR'' \quad (II)$$

in welcher R' ein aliphatischer, cycloaliphatischer, aromatischer, araliphatischer Kohlenwasserstoffrest mit 4 bis 12 Kehlenstoffatomen und R'' Wasserstoff oder ein Alkylrest mit 1 bis 8 Kohlenstoffatomen sein kann.

2. Polyesteramide gemäss Anspruch 1, dadurch gekennzeichnet, dass das Äquivalentverhältnis des Diamins gemäss B zu dem Diglykolamin® gemäss C zwischen 0,9:0,1 bis 0,3:0,7 liegt.

3. Polyesteramide gemäss den Ansprüchen 1 und 2, dadurch gekennzeichnet, dass das Verhältnis der polymeren Fettsäuren gemäss A zu den Dicarbonsäuren gemäss D zwischen 1,0:0 bis 0,1:0,9 liegt.

4. Verwendung der Polyesteramide gemäss den Ansprüchen 1 bis 3 für die Verklebung von organischen und anorganischen Substraten.

**Patentansprüche** für den Vertragsstaat: AT

1. Verfahren zur Herstellung von Polyesteramiden durch Kondensation von

A) dimerisierten Fettsäuren mit 16 bis 44 Kohlenstoffatomen,

B) einem Diamin der allgemeinen Formel (I)

$$H_2N-R-NH_2 \quad (I)$$

in welcher R ein aliphatischer Kohlenwasserstoffrest mit 2 bis 36 Kohlenstoffatomen sein kann, und

C) Diglykolamin® [= 2-(2-Aminoethoxy)ethanol] und gegebenenfalls

D) mindestens einer der Dicarbonsäuren der allgemeinen Formel (II)

$$R''OOC-R'-COOR'' \quad (II)$$

in welcher R' ein aliphatischer, cycloaliphatischer, aromatischer, araliphatischer Kohlenwasserstoffrest mit 4 bis 12 Kohlenstoffatomen und R'' Wasserstoff oder ein Alkylrest mit 1 bis 8 Kohlenstoffatomen sein kann.

2. Polyesteramide gemäss Anspruch 1, dadurch gekennzeichnet, dass das Äquivalentverhältnis des Diamins gemäss B zu dem Diglykolamin® gemäss C zwischen 0,9:0,1 bis 0,3:0,7 liegt.

3. Polyesteramide gemäss den Ansprüchen 1 und 2, dadurch gekennzeichnet, dass das Verhältnis der polymeren Fettsäuren gemäss A zu den Dicarbonsäuren gemäss D zwischen 1,0:0 bis 0,1:0,9 liegt.

4. Verfahren zur Herstellung von Verklebungen für organische und anorganische Substrate unter Verwendung der Polyesteramide gemäss den Ansprüchen 1 bis 3.

**Claims** for the Contracting States BE, DE, FR, GB, IT, LU, NL, SE

1. Polyester amides manufactured by condensing

(A) dimerised fatty acids having from 16 to 34 carbon atoms,

(B) a diamine of the general formula (I)

$$H_2N-R-NH_2 \qquad (I)$$

in which R may be an aliphatic hydrocarbon radical having from 2 to 36 carbon atoms, and

(C) Diglykolamin® [= 2-(2-aminoethoxy)-ethanol] and, optionally,

(D) at least one of the dicarboxylic acids of the general formula (II)

$$R''OOC-R'-COOR'' \qquad (II)$$

in which R' may be an aliphatic, cycloaliphatic, aromatic or araliphatic hydrocarbon radical having from 4 to 12 carbon atoms and R'' may be hydrogen or an alkyl radical having from 1 to 8 carbon atoms.

2. Polyester amides according to claim 1, characterised in that the ratio of equivalents of the diamine according to B to the Diglykolamin® according to C is within the range of from 0.9:0.1 to 0.3:0.7.

3. Polyester amides according to claims 1 and 2, characterised in that the ratio of the polymeric fatty acids according to A to the dicarboxylic acids according to D is within the range of from 1.0:0 to 0.1:0.9.

4. Use of the polyester amides according to claims 1 to 3 for the adhesion of organic and inorganic substrates.

**Claims** for the Contracting State: AT

1. Process for the manufacture of polyester amides by condensing

(A) dimerised fatty acids having from 16 to 44 carbon atoms,

(B) a diamine of the general formula (I)

$$H_2N-R-NH_2 \qquad (I)$$

in which R may be an aliphatic hydrocarbon radical having from 2 to 36 carbon atoms, and

(C) Diglykolamin® [= 2-(2-aminoethoxy)-ethanol] and, optionally,

(D) at least one of the dicarboxylic acids of the general formula (II)

$$R''OOC-R'-COOR'' \qquad (II)$$

in which R' may be an aliphatic, cycloaliphatic, aromatic or araliphatic hydrocarbon radical having from 4 to 12 carbon atoms and R'' may be hydrogen or an alkyl radical having from 1 to 8 carbon atoms.

2. Polyester amides according to claim 1, characterised in that the ratio of equivalents of the diamine according to B to the Diglykolamin® according to C is within the range of from 0.9:0.1 to 0.3:0.7.

3. Polyester amides according to claims 1 and 2, characterised in that the ratio of the polymeric fatty acids according to A to the dicarboxylic acids according to D is within the range of from 1.0:0 to 0.1:0.9.

4. Process for the manufacture of adhesives for organic and inorganic substrates using the polyester amides according to claims 1 to 3.

**Revendications** pour les Etats contractants BE, DE, FR, GB, IT, LU, NL, SE

1. Polyesteramides, caractérisés en ce qu'ils sont préparés par condensation

A) des acides gras dimérisés ayant 16 à 44 atomes de carbone,

B) d'une diamine de formule générale (I)

$$H_2N-R-NH_2 \qquad (I)$$

dans laquelle R peut représenter un radical d'hydrocarbure aliphatique ayant 2 à 36 atomes de carbone, et

C) de la Diglykolamin® [= 2-(2-aminoéthoxy)éthanol] et, éventuellement,

D) d'au moins un des acides dicarboxyliques de formule générale (II)

$$R''OOC-R'-COOR'' \qquad (II)$$

dans laquelle R' peut représenter un radical d'hydrocarbure aliphatique, cycloaliphatique, aromatique, araliphatique ayant 4 à 12 atomes de carbone et R'' de l'hydrogène ou un radical alkyle ayant 1 à 8 atomes de carbone.

2. Polyesteramides selon la revendication 1, caractérisés en ce que le rapport des équivalents de la diamine selon B à la Diglykolamin® selon C se situe entre 0,9:0,1 et 0,3:0,7.

3. Polyesteramides selon les revendications 1 et 2, caractérisés en ce que le rapport des acides gras polymères selon A aux acides dicarboxyliques selon B se situe entre 1,0:0 et 0,1:0,9.

4. Utilisation des polyesteramides selon les revendications 1 à 3 pour le collage de substrats organiques et minéraux.

**Revendications** pour l'Etat contractant: AT

1. Procédé de préparation de polyesteramides par condensation

A) des acides gras dimérisés ayant 16 à 44 atomes de carbone,

B) d'une diamine de formule générale (I)

$$H_2N-R-NH_2 \qquad (I)$$

dans laquelle R peut représenter un radical d'hydrocarbure aliphatique ayant 2 à 36 atomes de carbone, et

C) de la Diglykolamin® [= 2-(2-aminoéthoxy)éthanol] et, éventuellement,

D) d'au moins un des acides dicarboxyliques de formule générale (II)

$$R''OOC-R'-COOR'' \qquad (II)$$

dans laquelle R' peut représenter un radical

d'hydrocarbure aliphatique, cycloaliphatique, aromatique ou araliphatique ayant 4 à 12 atomes de carbone et R" de l'hydrogène ou un radical alkyle ayant 1 à 8 atomes de carbone.

2. Procédé selon la revendication 1, caractérisé en ce que le rapport des équivalents de la diamine selon B à la Diglykolamin® selon C se situe entre 0,9:0,1 et 0,3:0,7.

3. Procédé selon les revendications 1 et 2, caractérisé en ce que le rapport des acides gras polymères selon A aux acides dicarboxyliques selon B se situe entre 1,0:0 et 0,1:0,9.

4. Procédé de préparation de collages de substrats organiques et minéraux, caractérisé en ce qu'on utilise des polyesteramides obtenus par le procédé selon les revendications 1 à 3.